# FASCICULE DE BREVET EUROPEEN

(11) **EP 3 287 652 B1**
(45) Date de publication et mention de la délivrance du brevet: **12.06.2019**
(21) Numéro de dépôt: 17182205.9
(22) Date de dépôt: 19.07.2017
(51) Int. Cl.: F16C 35/073, B60B 27/02, B64C 25/36, B64C 25/40, F16C 35/077, F16C 19/38, F16C 19/54

(54) **ROUE D'AERONEF A BOITIER A ROULEMENTS SEPARABLE**
RAD EINES LUFTFAHRZEUGS MIT TRENNBAREM LAGERGEHÄUSE
AIRCRAFT WHEEL WITH A SEPARABLE BEARING BOX

(30) Priorité: 24.08.2016 FR 1657907
(43) Date de publication de la demande: 28.02.2018
(73) Titulaire: Safran Landing Systems, 78140 Vélizy-Villacoublay (FR)
(72) Inventeur: JABER, Sylvain, 78140 Velizy-Villacoublay (FR); BELLENGER, Vincent, 78140 Velizy-Villacoublay (FR); MORETTI, Nicolas, 78140 Velizy-Villacoublay (FR); ELUARD, Gilles, 78140 Velizy-Villacoublay (FR)
(74) Mandataire: Lavialle, Bruno François Stéphane

(56) Documents cités:
- EP-A1- 0 687 826
- EP-A1- 2 394 912
- FR-A- 1 155 836
- US-A- 2 613 892
- US-A1- 2016 031 259

## Description

L'invention est relative à une roue d'aéronef à boîtier à roulements séparable.

### ARRIERE PLAN DE L'INVENTION

On connaît des documents FR 1 155 836, US 2016/031259 et EP 0 687 826 des roues d'aéronef comportant un moyeu qui reçoit des roulements pour le montage à rotation de la roue sur un essieu d'atterrisseur, et une jante avec des talons d'extrémité pour recevoir un pneumatique, la jante étant solidarisée au moyeu par un voile. FR 1 155 836 divulgue les caractéristiques du préambule de la revendication 1. La roue peut être constituée de deux demi-roues solidarisées au niveau du voile par des boulons d'assemblage, ou au contraire être monobloc, l'un des talons étant alors prévu amovible pour le montage du pneumatique.

Ces roues sont retenues sur l'essieu au moyen d'un écrou d'extrémité dont le serrage assure la précharge des roulements montés en O. Il convient de remplacer régulièrement chacune des roues en raison de l'usure progressive du pneumatique, typiquement tous les deux cents vols. L'équipe de maintenance met l'atterrisseur sous chandelle, enlève l'écrou d'essieu et retire la roue pour la remplacer par une roue équipée d'un pneumatique neuf ou rechapé. La roue démontée part en atelier de maintenance où elle est désassemblée pour retirer le pneumatique usé en vue de son remplacement. Ce désassemblage est l'occasion d'inspecter les roulements, de les graisser, ou éventuellement de les remplacer s'ils ont atteint leur durée de vie prescrite.

Récemment, des pneumatiques dits longue durée sont apparus, permettant un nombre de vols bien plus importants entre deux changements de roue. De tels pneumatiques posent la question de l'inspection des roulements, qui selon les programmes de maintenance actuels, doit être opérée à une fréquence plus rapide que le changement de tels pneumatiques.

### OBJET DE L'INVENTION

L'invention vise à proposer une roue d'aéronef facilitant l'inspection, la maintenance ou le changement de ses roulements.

### RESUME DE L'INVENTION

En vue de la réalisation de ce but, on propose une roue d'aéronef comportant un moyeu et un boîtier à roulements pour le montage à rotation de la roue sur un essieu d'atterrisseur autour d'un axe de rotation, le moyeu étant adapté à recevoir de façon démontable le boîtier à roulements, une jante avec des talons d'extrémité pour recevoir un pneumatique, la jante étant solidarisée au moyeu par un voile, dans laquelle, selon l'invention, le boîtier à roulements comporte :
- deux roulements à portée conique avec chacun une bague interne et une bague externe, montés en O entre :
- une douille destinée à être enfilée sur l'essieu avec une paroi externe conformée pour recevoir les bagues internes des roulements, la douille ayant une extrémité conformée en butée et une autre extrémité conformée pour recevoir un écrou de précharge ;
- un manchon s'étendant autour de la douille et ayant une paroi interne présentant deux épaulements pour arrêter axialement les bagues externes des roulements, le manchon ayant une paroi externe conformée pour être glissée à ajustement dans un alésage du moyeu, avec une extrémité conformée en butée et une autre extrémité conformée pour recevoir un écrou d'arrêt.

Une telle roue peut être montée comme une roue classique sur l'essieu, l'écrou d'essieu servant alors à arrêter la douille du boîtier à roulements axialement sur l'essieu. Lors d'une opération de maintenance, la roue est retirée de l'essieu par dévissage de l'écrou d'essieu et le boîtier est séparé du reste de la roue par dévissage de l'écrou d'arrêt pour son remplacement par un autre boîtier aux roulements inspectés et graissés, l'opération pouvant se faire directement au pied de l'aéronef. La roue est alors remontée sur l'aéronef, et le boîtier démonté est emmené pour inspection et graissage des roulements.

Grâce à la roue de l'invention, il est donc possible de dissocier la fréquence d'inspection et de maintenance des roulements, et la fréquence de remplacement du pneumatique.

Qui plus est, la présence d'un manchon guidé par les roulements de la roue permet d'y atteler toutes sortes d'éléments, comme les pales d'un ventilateur ou la cible d'un capteur de rotation, comme un tachymètre à effet hall.

En outre, la présence de la douille et du manchon permet de motoriser facilement la roue, en adaptant sur le boîtier un moteur dont le stator est solidaire de la douille, et le rotor solidaire du manchon.

Selon un mode particulier de réalisation, le moteur ne comporte pas de roulements entre le rotor et le stator, les deux éléments étant guidés en rotation par les roulements du boîtier.

### BREVE DESCRIPTION DES DESSINS

L'invention sera mieux comprise à la lumière de la description qui suit de modes particuliers de réalisation de l'invention, en référence aux figures des dessins annexés parmi lesquelles :
- La figure 1 est une vue en perspective coupée d'une roue d'aéronef connue en soi, montée sur un essieu d'atterrisseur ;
- La figure 2 est une vue en perspective coupée d'une roue d'aéronef selon un mode particulier de réalisation de l'invention ;
- La figure 3 est une vue agrandie du boîtier à roulements équipant la roue de la figure 2 ;
- Les figures 4 à 6 sont des vues similaires à celles de la figure 2 de variantes de réalisation dans lesquelles le boîtier à roulements est motorisé.

### DESCRIPTION DETAILLEE DE L'INVENTION

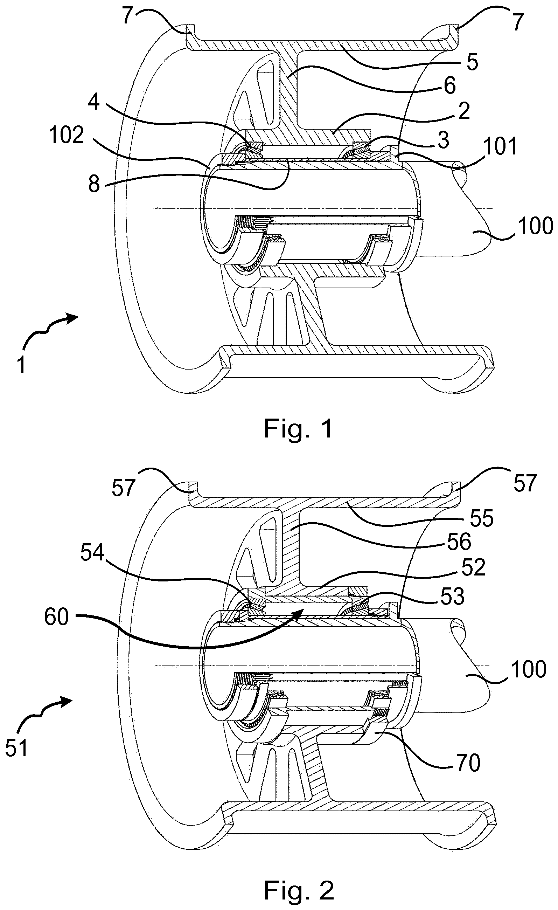

Une roue d'aéronef 1 classique telle qu'illustrée à la figure 1 comporte un moyeu 2 qui reçoit ici les bagues externes de roulements à rouleaux coniques 3,4. Le moyeu 2 est connecté à une jante 5 au moyen d'un voile 6 ajouré. La jante 5 comporte des talons 7 qui retiennent les flancs d'un pneumatique (non représenté), l'un des talons étant amovible pour recevoir le pneumatique. Les bagues internes des roulements 3,4 sont reçues sur un protecteur d'essieu 8 en forme de douille, dont une extrémité est conformée en butée pour venir appuyer sur un épaulement 101 d'un essieu 100 d'atterrisseur sur lequel le protecteur d'essieu 8 est enfilé. Un écrou d'essieu 102 vissé sur l'extrémité de l'essieu 100 vient précharger les roulements 3,4 et arrêter axialement la roue sur l'essieu qui tourne alors selon l'axe de rotation défini par l'essieu et les roulements. Lors d'un remplacement de la roue, il suffit de dévisser l'écrou d'essieu 102, de retirer l'ensemble de la roue pour la remplacer par une roue au pneumatique neuf ou rechapé, et aux roulements inspectés et graissés.

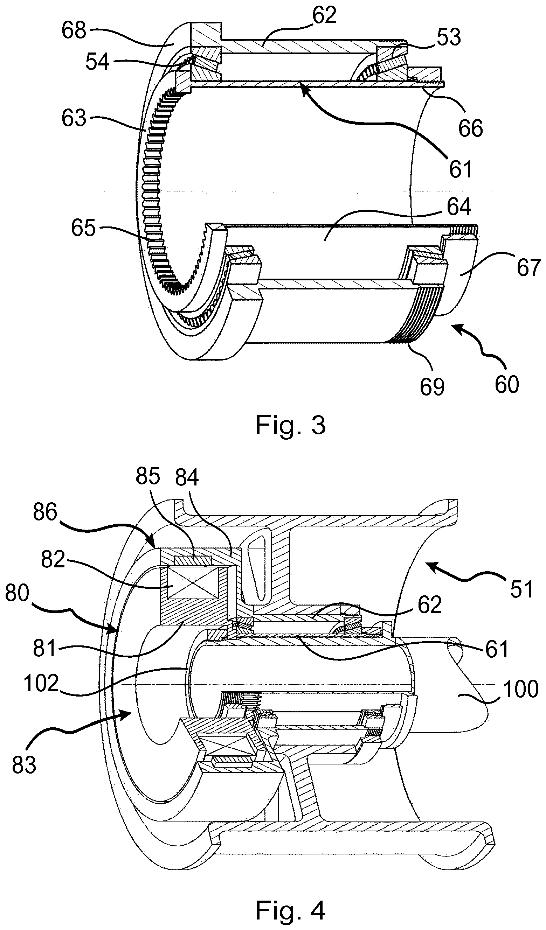

Selon l'invention, on propose une roue à moyeu séparable telle que la roue 51 illustrée à la figure 2. Une telle roue comporte toujours une jante 55 munie de talons 57 et reliée par un voile 56 à un moyeu 52. Cependant, le moyeu ne reçoit pas directement les roulements à portée conique 53,54. Selon l'invention, le moyeu 52 est rapporté sur un boîtier à roulements 60 illustré plus en détail à la figure 3 qui comporte une douille 61 qui vient s'enfiler sur l'essieu 100, et un manchon 62 sur la face externe duquel le moyeu 52 est rapporté. Les roulements 53, 54 s'étendent entre la douille 61 qui reçoit les bagues internes des roulements, et le manchon 62 qui reçoit les bagues externes des roulements.

A cet effet, le manchon 62 comporte des extrémités conformées en logements avec des épaulements formant butées pour recevoir les bagues externes des roulements 53,54. La douille 61 comporte quant à elle une extrémité 63 conformée de sorte à saillir de part et d'autre d'une partie tubulaire 64 à âme mince. La partie de l'extrémité 63 saillant vers les roulements forme une butée pour ceux-ci, tandis que la partie de l'extrémité 63 saillant vers l'essieu 100 comporte des cannelures 65 pour coopérer avec des cannelures homologues de l'essieu 100 pour assurer un arrêt en rotation de la douille 61 sur l'essieu 100. L'autre extrémité 66 de la douille 61 est filetée pour recevoir un écrou de précharge 67 pour précharger les roulements.

La paroi externe du manchon 62 est reçue à ajustement dans l'alésage du moyeu 52, Une extrémité 68 du manchon 62 forme un redan externe pour constituer une butée axiale du manchon 62, et l'autre extrémité 69 est filetée pour recevoir un écrou d'arrêt 70, visible à la figure 2.

Lors d'une opération d'inspection des roulements alors que le pneumatique porté par la roue peut encore durer pendant plusieurs vols, il suffit de démonter la roue, d'en retirer le boîtier à roulements pour le remplacer par un boîtier dont les roulements ont été inspectés et graissés, puis remonter la roue. L'opération peut être faite facilement au pied de l'aéronef, le retrait du boîtier de la roue ne nécessitant que le dévissage de l'écrou d'arrêt 70.

Ainsi, la roue de l'invention n'est ramenée en atelier que pour le changement de pneumatique, le cycle d'inspection, de maintenance et de remplacement des roulements étant décorrélé de celui du pneumatique.

La présence d'un boîtier permet la motorisation aisée de la roue. En effet, comme illustré aux figures 4 à 6, il suffit de solidariser le stator d'un moteur à la douille 61 et son rotor au manchon 62 pour faire tourner le manchon relativement à la douille, et ainsi entraîner la roue en rotation. Il convient bien entendu de prévoir des moyens de solidarisation en rotation (non représentés ici) entre le moyeu et le manchon (du type cannelures ou pions par exemple).

Comme illustré à la figure 4, Un moteur 80 est constitué d'une part par un prolongement 81 de la douille 61 qui s'étend pour recevoir un bobinage 82 et former un stator 83 du moteur, et d'autre part par un prolongement 84 du manchon 62 qui s'étend en regard du stator pour porter des aimants permanents 85 et former un rotor 86 du moteur. On remarquera qu'il n'y a aucun roulement entre le stator et le rotor du moteur, le guidage en rotation étant assuré par les roulements du boîtier à roulements 60. On remarquera également que le stator est conformé pour laisser passer une clé de serrage de l'écrou d'essieu 102.

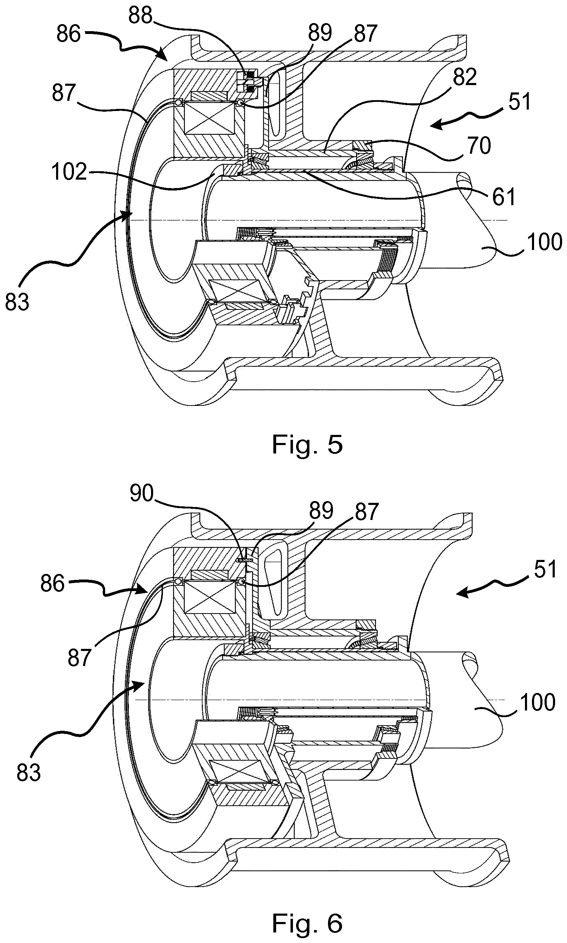

Selon une variante illustrée à la figure 5, le rotor 86 n'est plus directement solidaire du manchon, mais est monté à rotation sur le stator 83 par l'intermédiaire de roulements 87. Le rotor 86 est sélectivement accouplé en rotation au manchon au moyen d'un crabot 88 porté par un disque 89 formant un prolongement du manchon 62.
Selon une variante illustrée à la figure 6, le rotor 83 est maintenant relié au disque 89 au moyen de pions 90 (un seul est visible ici) calibrés pour céder lorsque le couple de transmission entre le disque 89 et le rotor 83 dépasse un seuil prédéterminé.

Dans toutes ces variantes motorisées, le boîtier à roulements 60 peut toujours être facilement désolidarisé du reste de la roue en dévissant l'écrou d'arrêt 70.

Selon un aspect particulier de l'invention, on remarquera en outre que le boîtier à roulements 60 est ici conformé pour permettre le montage, à la place d'une roue de l'invention, d'une roue classique selon l'art antérieur, comme celle de la figure 1, sur le même essieu sans aucun modification ou adaptation de l'essieu. Ceci permet le remplacement d'une roue selon l'invention par une roue classique en cas de nécessité de service. A cet égard, on remarquera que les roulements du boîtier à roulements 60 sont identiques et sont placés à la même position que celle de la roue classique, pour qu'ils portent de façon identique sur l'essieu en transmettant les mêmes efforts. On pourra alors simplement choisir un écrou d'essieu adapté ou intercaler une entretoise entre l'écrou et le roulement de la roue classique, pour compenser l'épaisseur de la butée de la douille, qui n'est plus présente dans une roue classique.

L'invention n'est pas limitée à ce qui vient d'être décrit, mais englobe au contraire toute variante entrant dans le cadre défini par les revendications.

En particulier, bien que l'on ait indiqué que la douille était cannelée pour son arrêt en rotation sur l'essieu, cette disposition est facultative, et n'est véritablement nécessaire que si le manchon est équipé d'un moteur, dont le stator doit être arrêté en rotation.

Bien que l'on ait représenté ici des boîtiers à roulements équipés de moteurs, avec des prolongements de la douille ou du manchon formant le stator, le rotor, ou le disque d'accouplement à un rotor, ces éléments pourront être venus de matière avec la douille ou le manchon, ou encore simplement rapportés sur ces derniers.

On pourra également équiper ces boîtiers d'autres organes que des moteurs, comme un ventilateur pour refroidir les disques de freins au travers du voile de la roue, ou un capteur de vitesse de rotation de la roue.

## Revendications

1. Roue d'aéronef comportant un moyeu (52) et un boîtier à roulements (60) pour le montage à rotation de la roue sur un essieu d'atterrisseur autour d'un axe de rotation, le moyeu étant adapté à recevoir de façon démontable le boîtier à roulements (60), une jante (55) avec des talons d'extrémité pour recevoir un pneumatique, la jante étant solidarisée au moyeu par un voile (56), **caractérisée en ce que** le boîtier à roulements (60) comporte :
- deux roulements (53,54) à portée conique avec chacun une bague interne et une bague externe, montés en O entre :
- une douille (61) destinée à être enfilée sur l'essieu avec une paroi externe conformée pour recevoir les bagues internes des roulements, la douille ayant une extrémité (63) conformée en butée et une autre extrémité conformée pour recevoir un écrou de précharge (67);
- un manchon (62) s'étendant autour de la douille et ayant une paroi interne présentant deux épaulements pour arrêter axialement les bagues externes des roulements, le manchon ayant une paroi externe conformée pour être glissée à ajustement dans un alésage du moyeu, avec une extrémité (68) conformée en butée et une autre extrémité conformée pour recevoir un écrou d'arrêt (70).

2. Roue d'aéronef selon la revendication 1, dans laquelle la douille comporte des moyens d'antirotation (65) aptes à coopérer avec des moyens homologues de l'essieu.

3. Roue d'aéronef selon la revendication 2, dans laquelle les moyens d'antirotation sont des cannelures (65) portées par l'extrémité de la douille conformée en butée pour les roulements.

4. Roue selon la revendication 1, dans laquelle le boîtier à roulements est équipé d'un moteur (80) pour faire tourner le manchon relativement à la douille.

5. Roue selon la revendication 4, dans lequel le moteur comporte un stator (83) solidaire de la douille (61), et un rotor (86) solidaire du manchon (62), le rotor et le stator étant guidés en rotation par les roulements de la roue (53,54) sans qu'aucun roulement ne soit disposé entre le stator et le rotor.

6. Roue selon la revendication 4, dans lequel le moteur comporte un stator (83) solidaire de la douille (61) et un rotor (86) monté tournant sur le stator au moyen de roulements (87), le rotor étant solidarisé en rotation à un disque (89) solidaire du manchon (62) par un organe de solidarisation (88 ; 90), comme un crabot (88) ou des pions (90) dimensionnés pour rompre lorsqu'un couple transmis entre le disque et le rotor dépasse un seuil prédéterminé.

7. Ensemble comportant un atterrisseur comportant au moins un essieu (100) muni d'un écrou d'essieu (102), et d'un choix de roues montables sur l'essieu dont :
- une roue (1) dont le moyeu reçoit directement des roulements pour son montage à rotation sur l'essieu 100, de sorte que les roulements soient enfilés sur l'essieu en étant arrêtés axialement et préchargés par l'écrou d'essieu ;
- une roue selon l'une des revendications précédentes dont le boîtier à roulements est enfilé sur l'essieu en étant arrêté axialement par l'écrou d'essieu ;
les deux roues ayant les mêmes roulements, disposés de façon identique.

## Patentansprüche

1. Luftfahrzeugrad, umfassend eine Nabe (52) und ein Lagergehäuse (60) zur Montage des Rades auf einer Fahrwerkachse drehend um eine Drehachse, wobei die Nabe dazu geeignet ist, das Lagergehäuse (60) auf abnehmbare Weise aufzunehmen, eine Felge (55) mit Endstücken zur Aufnahme eines Reifens, wobei die Felge fest mit der Nabe über eine Radscheibe (56) verbunden ist, **dadurch gekennzeichnet, dass** das Lagergehäuse (60) umfasst:
zwei Kegelrollenlager (53, 54) mit jeweils einem Innenring und einem Außenring, montiert als O zwischen:
- einer Buchse (61), die dazu bestimmt ist, auf die Achse aufgezogen zu werden, mit einer Außenwand, die geformt ist, um die Innenringe der Lager aufzunehmen, wobei die Buchse ein Ende (63) hat, das als Anschlag geformt ist, sowie ein anderes Ende, das geformt ist, um eine Vorspannungsmutter (67) aufzunehmen;
- einer Hülse (62), die sich um die Buchse erstreckt und eine Innenwand hat, die zwei Schultern aufweist, um die Außenringe der Lager axial zu stoppen, wobei die Hülse eine Außenwand hat, die geformt ist, um in einer Bohrung der Nabe in Passung zu gleiten, mit einem Ende (68), das als Anschlag geformt ist, sowie einem anderen Ende, das geformt ist, um eine Stoppmutter (70) aufzunehmen.

2. Luftfahrzeugrad nach Anspruch 1, bei dem die Buchse Antirotationsmittel (65) umfasst, die geeignet sind, mit homologen Mitteln der Radachse zusammenzuwirken.

3. Luftfahrzeug nach Anspruch 2, bei dem die Antirotationsmittel Rillen (65) sind, die von dem Ende der Buchse getragen werden, das als Anschlag für die Lager geformt ist.

4. Rad nach Anspruch 1, bei dem das Lagergehäuse mit einem Motor (80) ausgestattet ist, um die Hülse relativ zur Buchse zu drehen.

5. Rad nach Anspruch 4, bei dem der Motor einen Stator (83) umfasst, der fest mit der Buchse (61) verbunden ist, sowie einen Rotor (86), der fest mit der Hülse (62) verbunden ist, wobei der Rotor und der Stator von den Lagern des Rades (53, 54) in Drehung geführt werden, ohne dass ein Lager zwischen dem Stator und dem Rotor angeordnet ist.

6. Rad nach Anspruch 4, bei dem der Motor einen Stator (83) umfasst, der fest mit der Buchse (61) verbunden ist, und einen Rotor (86), der an dem Stator mittels Lager (87) drehbar gelagert ist, wobei der Rotor drehfest mit einer Scheibe (89) verbunden ist, die fest mit der Hülse (62) über ein Befestigungselement (88; 90) wie eine Klaue (88) oder Zapfen (90) verbunden ist, die so bemessen sind, dass sie brechen, wenn ein zwischen der Scheibe und dem Rotor übertragenes Drehmoment einen vorgegebenen Schwellwert übersteigt.

7. Satz, umfassend ein Fahrwerk, das mindestens eine Radachse (100) hat, die mit einer Achsenmutter (102) versehen ist, und eine Auswahl an Rädern, die auf der Radachse montierbar sind: darunter:
- ein Rad (1), dessen Nabe direkt die Lager für seine Drehmontage auf der Radachse (100) aufnimmt, derart, dass die Lager auf die Radachse aufgezogen sind und dabei von der Achsenmutter axial gestoppt und vorgespannt werden;
- ein Rad nach einem der vorhergehenden Ansprüche, dessen Lagergehäuse auf die Radachse aufgezogen ist und dabei von der Achsenmutter axial gestoppt wird;
wobei die beiden Räder die gleichen Lager haben, die auf identische Weise angeordnet sind.

## Claims

1. An aircraft wheel comprising a hub (52) for mounting the wheel on a landing gear axle to enable the wheel to rotate about an axis of rotation, and a rim (55) with edge flanges for receiving a tire, the rim being secured to the hub by a web (56), the wheel being **characterized in that** the hub is adapted to receive releasably a bearing box (60) comprising:
- two conical roller bearings (53, 54) each having an inner ring and an outer ring mounted between:
- a bushing (61) for engaging on the axle with an outside wall shaped to receive the inner rings of the bearings, the bushing having one end (63) shaped as an abutment and another end shaped to receive a pre-loading nut (67); and
- a sleeve (62) extending around the bushing and having an inside wall presenting two shoulders to hold the outer rings of the bearings axially, the sleeve having an outer wall shaped to be received as a sliding fit in a bearing of the hub, with one end (68) shaped as an abutment and another end shaped to receive a stop nut (70) .

2. An aircraft wheel according to claim 1, wherein the bushing includes anti-rotation means (65) suitable for co-operating with complementary means of the axle.

3. An aircraft wheel according to claim 2, wherein the anti-rotation means comprise fluting (65) carried by the end of the bushing that is shaped as an abutment for the bearings.

4. A wheel according to claim 1, wherein the bearing box is fitted with a motor (80) to cause the sleeve to rotate relative to the bushing.

5. A wheel according to claim 4, wherein the motor comprises a stator (83) secured to the bushing (61), and a rotor (86) secured to the sleeve (62), the rotor and the stator being guided in rotation by the bearings of the wheel (53, 54) without any bearing being arranged between the stator and the rotor.

6. A wheel according to claim 4, wherein the motor comprises a stator (83) secured to the bushing (61) and a rotor (86) rotatably mounted on the stator by means of bearings (87), the rotor being constrained to rotate with a disk (89) secured to the sleeve (62) by a securing member (88; 90) such as a dog (88) or pegs (90) dimensioned to break in the event of the force transmitted between the disks and the rotor exceeding a predetermined threshold.

7. A set comprising landing gear having at least one axle (100) provided with an axle nut (102), and a selection of wheels suitable for mounting on the axle, the selection including:
- a wheel (1) having a hub that receives directly the bearings for rotatably mounting it on the axle (100), such that the bearings are engaged on the axle and are stopped axially and pre-loaded by the axle nut; and
- a wheel according to any preceding claim, in which the bearing box is engaged on the axle and is held axially by the axle nut;
both wheels having the same bearings, in arrangements that are identical.
